(19) Europäisches Patentamt
European Patent Office
Office européen des brevets

(11) **EP 3 458 888 B1**

(12) **EUROPEAN PATENT SPECIFICATION**

(45) Date of publication and mention
of the grant of the patent:
**19.04.2023 Bulletin 2023/16**

(21) Application number: **17799837.4**

(22) Date of filing: **20.04.2017**

(51) International Patent Classification (IPC):
**G02B 6/12** *(2006.01)*     **G02B 6/14** *(2006.01)*
**G02B 6/122** *(2006.01)*     **G02B 6/136** *(2006.01)*
**G02B 1/115** *(2015.01)*

(52) Cooperative Patent Classification (CPC):
**G02B 6/14; G02B 1/115; G02B 6/1228;
G02B 6/136;** G02B 6/1223; G02B 2006/12097;
G02B 2006/12104; G02B 2006/12147

(86) International application number:
**PCT/US2017/028602**

(87) International publication number:
**WO 2017/200694 (23.11.2017 Gazette 2017/47)**

(54) **SINGLE MODE OPTICAL COUPLER**

SINGLEMODE-GLASFASERKOPPLER

COUPLEUR OPTIQUE MONOMODE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.05.2016 US 201662339624 P
30.09.2016 US 201615282728**

(43) Date of publication of application:
**27.03.2019 Bulletin 2019/13**

(73) Proprietor: **INTEL Corporation
Santa Clara, CA 95054 (US)**

(72) Inventors:
• **RYCKMAN, Judson D.
Dayton, California 45419 (US)**
• **FRISH, Harel
Albuquerque, NM 87122 (US)**
• **GHIURCAN, George A.
Corrales, New Mexico 87048 (US)**
• **LIU, Ansheng
Cupertino, California 95014 (US)**
• **RONG, Haisheng
Pleasanton, California 94566 (US)**
• **SRINIVASAN, Pradeep
Fremont, California 94539 (US)**
• **BRANDT, Carsten
Peralta, New Mexico 87042 (US)**
• **HOSHINO, Isako
Burlingame, California 94010 (US)**
• **CREIGHTON, Michael A.
Albuquerque, New Mexico 87105 (US)**

(74) Representative: **Samson & Partner Patentanwälte
mbB
Widenmayerstraße 6
80538 München (DE)**

(56) References cited:
WO-A1-2004/008203     WO-A1-2013/048411
WO-A1-2016/011002     WO-A1-2016/064425
WO-A1-2016/172202     WO-A1-2018/002675
JP-B2- 5 259 829     US-A1- 2006 239 605
US-A1- 2016 041 340     US-A1- 2016 041 340
US-A1- 2016 139 350

• **MYUNG-HYUN LEE ET AL: "Fully packaged
polymeric four arrayed 2 x 2 digital optical
switch", IEEE PHOTONICS TECHNOLOGY
LETTERS, IEEE SERVICE CENTER,
PISCATAWAY, NJ, US, vol. 14, no. 5, 1 May 2002
(2002-05-01), pages 615-617, XP011426740, ISSN:
1041-1135, DOI: 10.1109/68.998702**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- GAN OFIR ET AL: "Programmed resist sidewall profiles using subresolution binary grayscale masks for Si-photonics applications", ADVANCED FABRICATION TECHNOLOGIES FOR MICRO/NANO OPTICS AND PHOTONICS V, SPIE, 1000 20TH ST. BELLINGHAM WA 98225-6705 USA, vol. 8249, no. 1, 8 March 2012 (2012-03-08), pages 1-16, XP060023571, DOI: 10.1117/12.907275 [retrieved on 1901-01-01]

## Description

## Related Application

This application claims priority to U.S. Application 15/282,728, entitled "SINGLE MODE OPTICAL COUPLER," filed September 30, 2016 which claims priority to U.S. provisional application 62/339,624, entitled "SINGLE MODE OPTICAL COUPLER," filed on May 20, 2016.

## Field

Embodiments of the present disclosure generally relate to the field of optoelectronics and, more particularly, to techniques and configurations for providing a single mode optical coupler for planar photonics circuits such as silicon photonics circuits fabricated on silicon-on-insulator (SOI) wafers.

WO 2016/011002 A1 relates to the integration of different optoelectronic devices through light coupling elements such as turning mirrors, lenses, and gratings. For example, a method realizes integrated lasers and photonic integrated circuits on complimentary metal-oxide semiconductor (CMOS)-compatible silicon (Si) photonic chips. The integration techniques rely on light coupling with integrated light coupling elements such as turning mirrors, lenses, and surface grating couplers. Light is coupled from between two or more substrates using the light coupling elements. The technique realizes integrated lasers on Si where a gain flip chip (the second substrate) is bonded to a Si chip (the first substrate) and light is coupled between a waveguide in the gain flip chip to a Si waveguide by way of a turning mirror or grating coupler in the flip chip and a grating coupler in the Si chip. Integrated lenses and other elements such as spot-size converters are also incorporated to alter the mode from the gain flip chip to enhance the coupling efficiency to the Si chip. The light coupling integration technique also allows for the integration of other components such as modulators, amplifiers, and photodetectors. These components are waveguide-based or non-waveguide based, that is to say, surface emitting or illuminating.

US 2016/041340 A1 relates to optical couplers having anchored cantilever structure and fabrication thereof. For example, an optical coupler structure includes a substrate, a waveguide section and an anchored cantilever section. The substrate includes a main body and a sub-pillar structure formed on the main body. The waveguide section is disposed on the substrate, and includes a core waveguide of a first material surrounded by a cladding layer of a second material. The anchored cantilever section is disposed on the sub-pillar structure on the substrate, which is configured to support the cantilever section and separate the cantilever section from the main body of the substrate. The anchored cantilever section includes a multi-stage inverse taper core waveguide and a cladding layer, of the second material, which surrounds the multi-stage inverse taper core waveguide.

WO 2016/064425 A1 relates to an optical coupler. The optical coupler includes a waveguide formed in a first layer of a layered structure that is to propagate an optical signal. The waveguide includes an end portion. The optical coupler also includes a turning mirror that includes a bulk structure and a reflective material deposited on an angular face of the bulk structure to form a surface of the turning mirror. The bulk structure can have a greater cross-sectional size than a cross-sectional size of the waveguide, such that the angular face extends above the first layer of the layered structure and extends into a second layer of the layered structure below the first layer. The surface of the turning mirror can be arranged to reflect the optical signal that is provided from the end portion of the waveguide.

GAN OFIR ET AL, "Programmed resist sidewall profiles using subresolution binary grayscale masks for Si-photonics applications", ADVANCED FABRICATION TECHNOLOGIES FOR MICRO/NANO OPTICS AND PHOTONICS V, SPIE, 1000 20TH ST. BELLINGHAM WA 98225-6705 USA, vol. 8249, no. 1, relates to a 45-degreee mirror created for optical applications utilizing CMPS high-volume manufacturing processes with grayscale lithography technique.

WO 2018/002675 A1 relates to apparatuses and methods of transmitting optical signals between optoelectronic transducers, including vertical-cavity surface-emitting lasers (VCSELs) and -photodiodes, and optical fibers as a part of a Photonic Integrated Circuit (PIC). The optical coupler and method of assembly provide efficient coupling from the PIC waveguide layer to external components, such as optical fibers, VCSELs, photodetectors, and gain blocks, among others. The optical coupler includes a PIC that can be supported by-a printed circuit board, an optoelectronic transducer supported by the PIC that can convert between optical signals and corresponding electrical signals, and a coupled waveguide assembly. The coupled waveguide assembly includes a low-index waveguide, a high-index waveguide, and a reflective surface that changes a pathway of the optical signals to direct the optical signals from the optoelectronic transducer into the low-index waveguide or from the low-index waveguide into the optoelectronic transducer.

WO 2016/172202 A1 relates to vertical output couplers for photonic devices, such as waveguides manufactured using wafer-based microelectronic processes. For example, a method forms a vertical output coupler for a waveguide that propagates light along a horizontal propagation direction, through a waveguide material that overlies a buried oxide layer. The method includes etching the waveguide to remove a portion of the waveguide. The etching forms at least a first plane that is at an edge of the waveguide, is adjacent to the removed portion of the waveguide, and is tilted at a vertical angle between 20 degrees and 70 degrees with respect to the propagation direction. The method further includes coating the first tilted plane with a reflective metal to form a mirror, such that the mirror reflects the light into a direction having a vertical component.

WO 2013/048411 A1 discloses an apparatus, system, and method, for providing a vertical optical coupler (VOC) for planar photonics circuits such as photonics circuits fabricated on silicon-on-insulator (SOI) wafers. In one embodiment, the VOC comprises a waveguide made from a material having refractive index in a range of 1.45 to 3.45, the waveguide comprising: a first end configured to reflect light nearly vertical by total internal reflection between the waveguide and another medium, a second end to receive the light for reflection, and a third end to output the reflected, light. The VOC couples with a Si waveguide having a first region including: a first end to receive light; and an inverted, tapered end in the direction of light propagation to output the received, light, wherein the inverted tapered end of the Si waveguide is positioned inside the waveguide.

## Summary

The present invention is defined in the independent claim 1. The dependent claims define embodiments thereof.

## Brief Description of the Drawings

Embodiments will be readily understood by the following detailed description in conjunction with the accompanying drawings. To facilitate this description, like reference numerals designate like structural elements. Embodiments are illustrated by way of example and not by way of limitation in the figures of the accompanying drawings.

FIG. 1 is a block diagram of an optoelectronic device that may include a single mode optical coupler configured with a multi-stage taper and a mirror to reflect light as described herein, in accordance with some embodiments.

FIG. 2 is a cross-sectional side view of an optical coupler including a multi-stage taper in accordance with various embodiments.

FIG. 3 is a cross-sectional view of the optical coupler of FIG. 2 showing waveguide sections corresponding to the regions of light propagation indicated in FIG. 2.

FIGS. 4A through 4D illustrate example light modes in accordance with various embodiments.

FIG. 5 shows infrared mode characterizations corresponding to various output coupler designs in accordance with various embodiments.

FIG. 6 shows example optical mode profiles for a waveguide portion at the end of region (ii) in accordance with various embodiments.

FIG. 7 shows modeled reflectance as a function of wavelength for different anti-reflective coating designs in accordance with various embodiments.

FIG. 8 shows schematic illustrations of 2-layer and 3-layer ARC stacks in accordance with various embodiments.

FIG. 9 shows example mode profiles for a waveguide output and modeled reflectivity of each mode for a 2-layer ARC in accordance with various embodiments.

FIG. 10 illustrates device selective grayscale design selection in accordance with various embodiments.

FIG. 11 illustrates single-mode back reflection as a function of mirror angle theta for an example optical coupler in accordance with various embodiments.

FIG. 12 shows a corresponding finite difference time domain (FDTD) field distribution for various mirror angles relating to the back reflection of FIG. 11 in accordance with various embodiments.

FIG. 13 is a cross-sectional side view of additional embodiments of the optical coupler having one or more integrated intermediate materials.

FIG. 14 is a block diagram of an optoelectronic system that may include an optical coupler configured with a multi-stage taper and a mirror to reflect light as described herein, in accordance with some embodiments.

FIG. 15 schematically illustrates an example computing device including an optical device with an optical coupler, in accordance with some embodiments.

## Detailed Description

Embodiments of the present disclosure describe techniques and configurations for an optical device configured to provide optical coupling with other optical devices. In the embodiments, a single mode optical coupler includes a multi-stage optical taper to convert light from a first mode field diameter to a second mode field diameter larger than the first mode field diameter, and a mirror formed in a dielectric layer under an approximately 45 degree angle with respect to a plane of the dielectric layer to reflect light from the multi-stage optical taper substantially perpendicularly to propagate the light in a single mode fashion. In the embodiments, the multi-stage taper includes an inverse taper as a first stage and a rib waveguide taper as a second stage.

Silicon photonics is often considered one of the most popular and successful technology platforms based on planar photonics circuits for cost effective optoelectronics integration. Optical waveguide-based photonics devices such as lasers, modulators, and detectors are typically fabricated on silicon-on-insulator (SOI) wafers. In SOI photonic systems, light is typically confined in a wafer (or chip) plane. Silicon waveguides are typically designed with submicron cross-sections, allowing dense integration of active and passive devices to achieve higher speed and lower driving power. Due to the high refractive index contrast between silicon and other media (e.g., air or glass), the numerical aperture (NA) of light exiting the silicon chip may be larger than the typical NA of optic fibers.

Previous coupling configurations and techniques include both optical couplers based on grating couplers and mode converters for both edge and vertical emission. Mode converter solutions are generally limited to edge coupling approaches unless an approximately 45 degree mirror is introduced into the optical path to redirect light upward. Furthermore, such approaches have not been specifically optimized for coupling to single mode fiber; which may require optimization of single mode output characteristic and minimization of emission angle variation. Previous mode converter approaches are also generally limited to single layer anti-reflection (AR) coatings. Various embodiments may include multi-layer AR coatings targeted at minimizing the reflection between a dielectric and air interface. Although grating couplers have been demonstrated for near-vertical emission and single-mode output characteristic, they generally suffer from high back-reflection unless emission is oriented away from vertical (due to second order diffraction) and limited spectral bandwidth. While grating couplers enable a low NA emission pattern that is favorable for relaxed alignment tolerances, this low NA increases the penalty relating to emission angle variation (a parameter which is highly fabrication sensitive, thus requiring extreme fabrication tolerances or active angular alignment schemes for single mode fiber attach).

In the following description, various aspects of the illustrative implementations will be described using terms commonly employed by those skilled in the art to convey the substance of their work to others skilled in the art. However, it will be apparent to those skilled in the art that embodiments of the present disclosure may be practiced with only some of the described aspects. For purposes of explanation, specific numbers, materials, and configurations are set forth in order to provide a thorough understanding of the illustrative implementations. It will be apparent to one skilled in the art that embodiments of the present disclosure may be practiced without the specific details. In other instances, well-known features are omitted or simplified in order not to obscure the illustrative implementations.

In the following detailed description, reference is made to the accompanying drawings that form a part hereof, wherein like numerals designate like parts throughout, and in which is shown by way of illustration embodiments in which the subject matter of the present disclosure may be practiced. It is to be understood that other embodiments may be utilized and structural or logical changes may be made without departing from the scope of the present disclosure. Therefore, the following detailed description is not to be taken in a limiting sense, and the scope of embodiments is defined by the appended claims.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B, and C).

The description may use perspective-based descriptions such as top/bottom, in/out, over/under, and the like. Such descriptions are merely used to facilitate the discussion and are not intended to restrict the application of embodiments described herein to any particular orientation.

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

The term "coupled with," along with its derivatives, may be used herein. "Coupled" may mean one or more of the following. "Coupled" may mean that two or more elements are in direct physical or electrical contact. However, "coupled" may also mean that two or more elements indirectly contact each other, but yet still cooperate or interact with each other, and may mean that one or more other elements are coupled or connected between the elements that are said to be coupled with each other. The term "directly coupled" may mean that two or more elements are in direct contact.

In various embodiments, the phrase "a first layer formed, deposited, or otherwise disposed on a second layer" may mean that the first layer is formed, deposited, grown, bonded, or otherwise disposed over the second layer, and at least a part of the first layer may be in direct contact (e.g., direct physical and/or electrical contact) or indirect contact (e.g., having one or more other layers between the first layer and the second layer) with at least a part of the second layer.

As used herein, the term "module" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable components that provide the described functionality.

Various embodiments may include techniques, configurations, devices, and/or systems for coupling light from silicon photonic transmitter chips using standard complementary metal oxide semiconductor (CMOS) processing techniques. Various embodiments may include: a single mode emission profile to enable efficient coupling from a transmitter chip to single mode fiber, a vertical or near-vertical emission with minimal angle variation, and a low back reflection to minimize laser feedback.

Some embodiments may address one or more of the three items listed above using one or more of the following components or techniques.

     (1) A multi-stage taper and a ~45 degree mirror design to enable efficient vertical/near vertical single mode coupling with a compact footprint. Previous approaches have not used this combination of multi-stage tapering plus a ~45 degree mirror for single mode coupling.

(2) A method for improved fabrication control over the mirror angle using programmable stepping/selection of grayscale design to compensate for within-wafer angle variations (e.g., due to etch or process non-uniformity).

(3) [A]: A multilayer anti-reflection (AR) coating integrated onto the device, to enable lower back reflection than a single layer AR coating can provide. In some embodiments, this approach may utilize tunable refractive index materials such as silicon nitride and silicon-rich nitride and also may benefit from co-optimization of the mode-converter waveguide refractive index. [B]: Some embodiments may reduce back reflection (can be combined with single layer or multi-layer AR coating) by implementing a non-45 degree mirror. Utilizing an angle away from 45 degrees may allow for further suppression of the back-reflection from the waveguide-air interface and may maintain the single-mode output profile in various embodiments. In this case, the packaging scheme to single mode fiber may be designed for optical coupling with a non-vertical emission angle in some embodiments. In various embodiments, this may be achieved, for example, by angling the fiber, changing the fiber facet angle, or modifying a lens or prism. [C]: Some embodiments may include an optional addition of a double-sided grayscale slope to increase device yield and reduce risk of back-reflection where the Si waveguide interfaces with the lower index waveguide.

Some previous approaches to vertical coupling with a wave-guide +45 degree mirror have relied solely on a single taper stage to convert light from a small mode-field diameter (MFD) silicon waveguide (<0.8 micron) to a larger MFD waveguide (>1.5 micron) comprised of a lower index material (<3.5). When coupling between such waveguides in a compact footprint (e.g., <300 micron length) the output emission profile is generally multi-mode in nature owing to inefficient coupling from the fundamental mode of the silicon waveguide to the fundamental mode of the lower index waveguide. With a single stage mode converter relying on an inverse taper, efficient coupling to the lower index waveguide's fundamental mode often requires either (i) substantially increasing the taper length (to -mm scale), or (ii) reducing the size of the output waveguide (which is disadvantageous owing to the higher NA output that would result).

Various embodiments overcome one or more of these limitations by using a multi-stage taper, wherein an inverse taper is used to provide a partial mode expansion only, then a second stage rib waveguide taper is used to provide the remaining mode expansion and match the output fundamental mode of the lower index waveguide. Some embodiments with this output taper and waveguide include an adiabatic final mode expansion in order to maintain power in the fundamental mode of the output waveguide. In various embodiments, the waveguide is interfaced with the mirror in a way that does not distort the output mode profile. Non-optimal approaches which may lead to distortion of the output mode profile include: (i) an output rib waveguide overlapping with the mirror which would cause interference between the etched and un-etched regions; and (ii) an output rib waveguide terminated into a channel waveguide or slab region before the mirror (causing excitation of higher order horizontal modes).

In some embodiments, to achieve low-loss optical coupling into single mode fiber, the mirror angle of the output coupler may be accurately controlled. For embodiments targeted at vertical emission (0 degrees), for example, the optimal mirror angle may be 45 degrees. Due to the combined effects of reflection from the mirror and refraction at the output optical interface, 1 degree of mirror variation can cause >3 degrees of output emission angle variation (for a waveguide of index n> 1.5, for example). As the emission angle mismatch increases, so does coupling loss into single mode fiber. The exact variation of coupling loss depends on the NA of the output coupler and the magnification of the lens/packaging scheme (if any is used). In some examples of a silicon-nitride based optical coupler (n~2) and an output NA-0.3, the optical coupling penalty reaches 1dB for approximately 2 degrees of mirror tilt (e.g., 43deg +/- 2deg).

Conventional approaches to mirror fabrication often rely on grayscale lithography and may also involve transfer etching into a dielectric layer. Typically, the mirror angle defined in the photoresist (via grayscale lithography) can be well controlled and may be highly repeatable within a wafer. However, the mirror angle transferred into the dielectric layer may be affected strongly by the selectivity of the etch process. This selectivity may vary spatially within an etch chamber, and accordingly may also vary across the surface of a large wafer (e.g., 150mm, 200mm, 300mm, 450mm diameter), thereby causing the mirror angle to vary within the wafer. Solutions to this problem are typically limited to achievable process capabilities (e.g., minimization of etch selectivity within a wafer, and reduction of nominal etch selectivity value).

Techniques described with respect to various embodiments may overcome limitations of previous approaches by providing for the across wafer variation of etch selectivity to be compensated by a programmable grayscale design selection using a single mask with stepper tool X,Y translation. For example, if etch selectivity is systematically low at the center of the wafer and high at the wafer edge, the stepper tool may be programmed to shift the mask by a pre-defined distance so that it prints a higher grayscale resist angle at the wafer center and a shallower grayscale resist angle at the wafer edge in various embodiments. In some embodiments, this approach may require all of the grayscale angle designs to be included on the same mask. In various embodiments, based on the X,Y offset applied by the stepper tool, only 1 design may be selected and printed on the active device of interest. In some embodiments, the other grayscale designs may also be printed on the wafer (or substrate), but they may be located in an inactive location that does not affect device performance. By increasing the number of grayscale designs, the within-wafer mirror angle variation (and thus the optical coupling loss) may be increasingly reduced in various embodiments.

Various embodiments may include the construction and/or use of multilayer optical coatings using silicon-dioxide and silicon-(rich)nitride ($Si_xN_y$) with a stoichiometrically tunable refractive index optimized for a single mode waveguide output. In some embodiments, both the waveguide and at least one of the AR coating layers may be comprised of silicon-(rich)nitride ($Si_xN_y$) and at least one of the layers may be comprised of silicon-dioxide. In various embodiments, the multi-layer ARC may be optimized to suppress the back-reflection of the fundamental mode of the output waveguide. In some embodiments, this may suppress the reflection to a value lower than can be achieved for an optimized coating on a multi-mode waveguide (back reflection is sensitive to mode-content of the waveguide). Thus, various embodiments may offer optimally low back reflection by utilizing a single mode output profile in combination with a tunable refractive index ($Si_xN_y$) platform for both the waveguide and one or more of the AR coating layers.

Various embodiments may pertain to the challenge of optically coupling light from an on-chip silicon waveguide to an off-chip single mode fiber (SMF). Various embodiments may provide improvements over previous technologies for performing this function in relation to low coupling loss, low back reflection, and vertical or near-vertical emission from the chip with single-mode character.

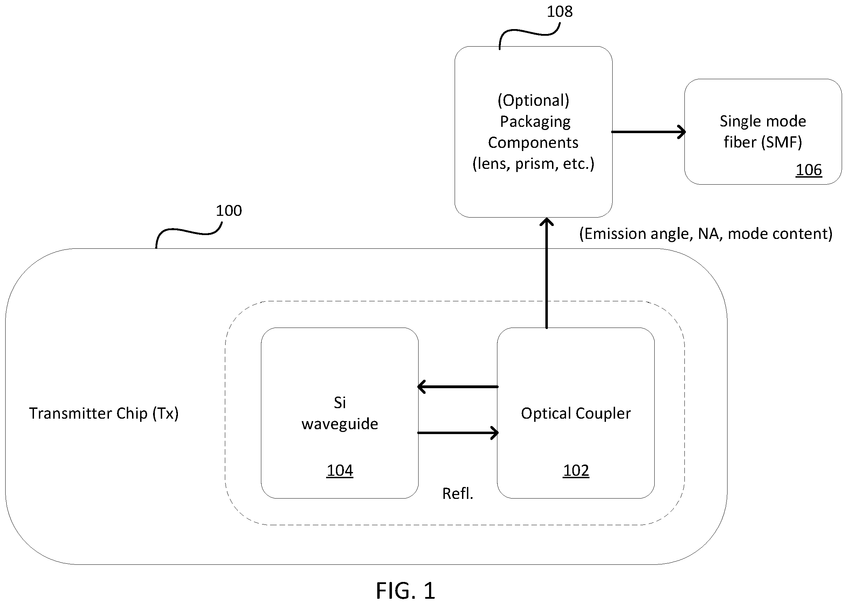

Figure 1 shows a schematic block diagram depicting a Transmitter Chip (Tx) 100, having an optical coupler 102 formed in accordance with various embodiments. In various embodiments, the optical coupler 102 takes light from an on-chip silicon waveguide 104, transforms the optical mode of the light adiabatically to a larger mode field diameter (MFD) fundamental mode of a lower index (<3.5) waveguide, and then directs that light off-chip for coupling to a single mode fiber (SMF) 106. In various embodiments, the output light may be characterized by emission angle, numerical aperture (NA), and mode content, while the reflected light may be characterized by its reflection amplitude, "Refl". In some embodiments, the large MFD waveguide may be comprised of one or more of a variety of materials such as silicon nitride, silicon-rich nitride, aluminum nitride, tantalum oxide, silicon oxynitride, doped silicon dioxide, a polymer such as polyimide, SU-8, or some other material.

The Tx 100 may include a variety of optical components not shown in the diagram (e.g., modulator, lasers, waveguides, splitters, etc.). Toward the optical output of the Tx 100, the silicon waveguide 104 may interface with the optical coupler 102 in various embodiments. This optical coupler 102 may take the input light with a generally very low mode- field diameter (MFD) (e.g., <0.5 micron), convert it to a higher MFD optical mode adiabatically so as not to significantly excite higher order modes (e.g., >5%), and then reflect this light upward away from the chip surface using an angled mirror interface under total-internal reflection (TIR). In some embodiments, the light emitted from the chip 100 may be characterized by its emission angle relative to the chip surface normal, the numerical aperture (NA), and the mode content which was carried in the output waveguide. This light may then be coupled into the single mode fiber (SMF) 106 and may or may not pass through one or more off-chip optical components 108 (e.g. lens, prism, isolator, etc.) before reaching the SMF facet. Coupling methods may include for example: butt coupling with or without an intermediate material (e.g. epoxy) in the optical path, or lens coupling (using 1 or 2 lenses or some other number of lenses) to magnify the optical MFD to approximately match that of SMF; and the alignment scheme for lens/fiber attach may be active (feedback based) or passive (mechanical alignment based).

In some embodiments, light that passes from the input silicon waveguide 104 to the optical coupler 102 may experience reflection from the optical coupler 102 (noted as "Refl." in Figure 1). This reflection may be due to one or more optical interfaces that exist within the optical coupler 102 and may include: the initial interface between the silicon waveguide 104 and the lower index output waveguide; taper terminations and tips along the optical path; and/or the dielectric/air interface at the output of the device.

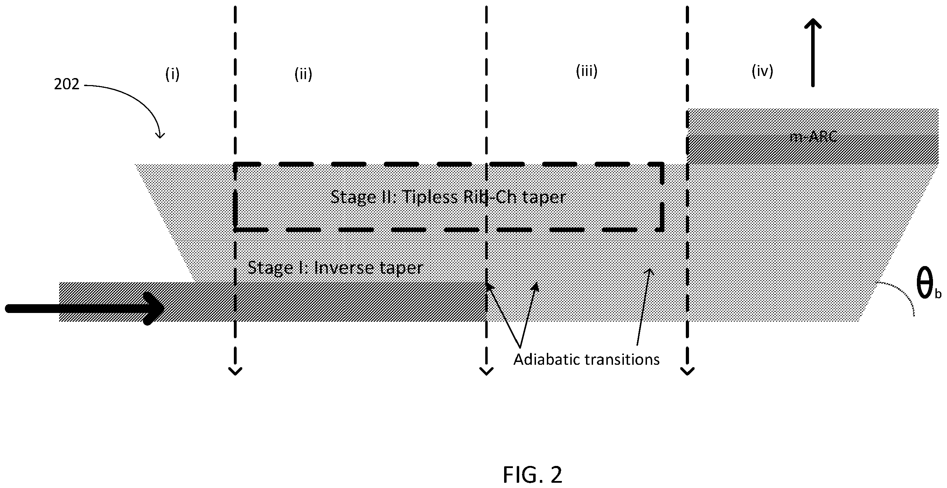

Figure 2 shows a more detailed cross-sectional side-view illustration of an example embodiment of the optical coupler 102 of Fig. 1, shown as an optical coupler 202. Four regions of the device are indicated, including: (i) silicon waveguide region; (ii) inverse taper region; (iii) output waveguide and/or taper; and (iv) final waveguide section including a TIR mirror with angle θ a/b, and an anti-reflection coating (ARC). In various embodiments, a large MFD waveguide is included in region (iii) and/or (iv) and may be comprised of one or more of a variety of materials such as silicon nitride, silicon-rich nitride, aluminum nitride, tantalum oxide, silicon oxynitride, doped silicon dioxide, a polymer such as polyimide, SU-8, or some other material. In some embodiments, an inverse taper waveguide of the inverse taper region (ii), having a low MFD, may be comprised of any material having a higher refractive index than the large MFD waveguide, and may include one or more of silicon, silicon nitride, silicon-rich nitride, aluminum nitride, tantalum oxide, silicon oxynitride, or some other material. In various embodiments, a refractive index of the material comprising the low MFD and/or the high MFD waveguide may be tuned using one or more techniques such as doping or stoichiometric adjustment. In some embodiments, a refractive index of one or more materials such as silicon-rich nitride, doped silicon dioxide, silicon oxynitride, or some other material forming one or more of the low MFD waveguide or the high MFD waveguide may be adjusted prior to or during formation of the coupler.

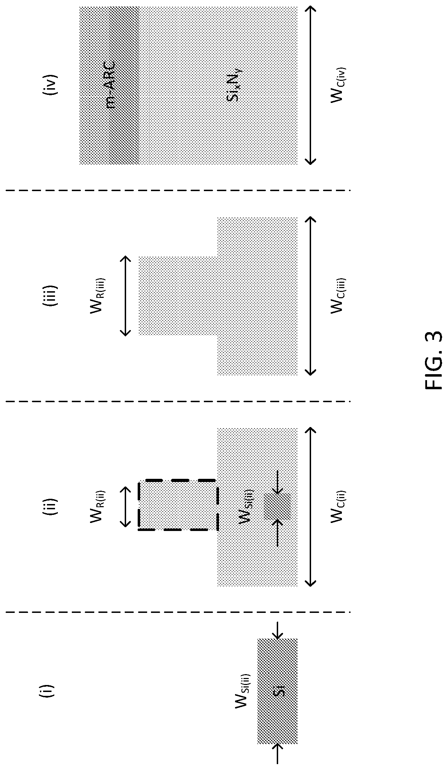

Figure 3 shows cross-sectional slice illustrations of the waveguide sections (i-iv) corresponding to the regions of light propagation indicated in Fig. 2.

Various embodiments include a grayscale slope to reduce or eliminate edge effects due to waveguide formation or etch. In some embodiments, the grayscale slope is used to suppress waveguide formation or etch from affecting the underlying Si waveguide, and to increase performance (reduce loss and reduce back reflection) and/or increase yield. This aspect is illustrated in Fig. 2, region (i). Previous couplers do not typically include this input-side slope. In various embodiments, the addition of an input-side slope in region (i) serves to minimize edge effects due to waveguide formation or etch. For example, during a grayscale etch process which is performed in the fabrication of regions (ii) through (iv), this etch may stop on or slightly above the underlying/embedded silicon waveguide. At the sidewalls of this etch, the flow of reactive gases may be limited and cause a localized micro-loading effect which can accelerate the etch rate relative to the center of regions (ii, iii) and thus risk damaging the underlying/embedded silicon waveguide. Effects of this unwanted damage can include increased transmission loss, coupling loss, back reflection and reduced device yield. In some embodiments, addition of the input-side slope may circumvent these issues, while posing no other side-effect to device performance.

The invention includes an adiabatic evolution design of a lower MFD silicon waveguide mode to a higher MFD lower index waveguide fundamental mode followed by a TIR mirror output emission off-chip. This relates to regions (ii), (iii), and (iv) of FIGS. 2 and 3. The invention includes a waveguide design to enable adiabatic mode evolution from the fundamental mode of an input silicon waveguide in region (i) to the fundamental mode of a lower index waveguide in region (iii). In previous designs, coupling from the silicon waveguide to the lower index waveguide is performed solely through a Si inverse taper in region (ii), and this transition may or may not be adiabatic.

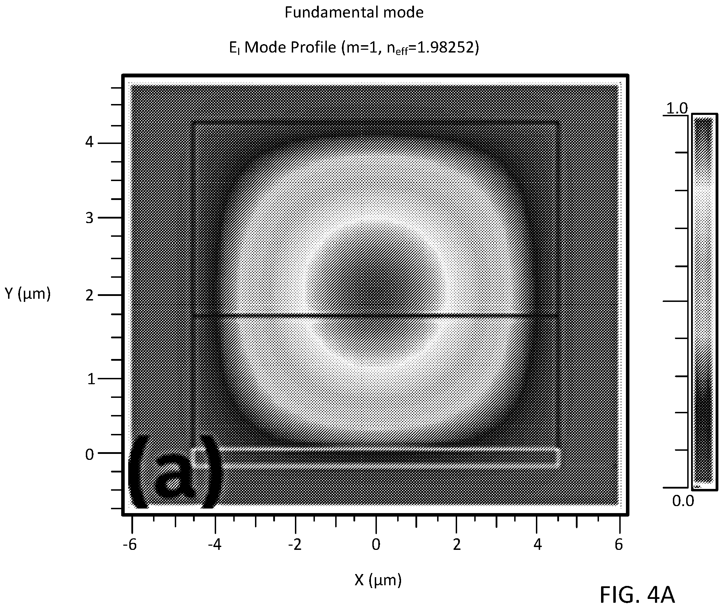

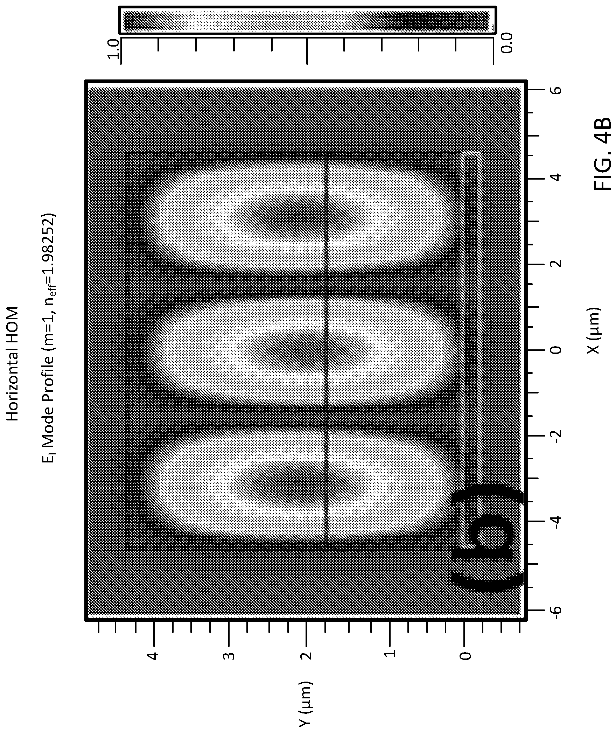

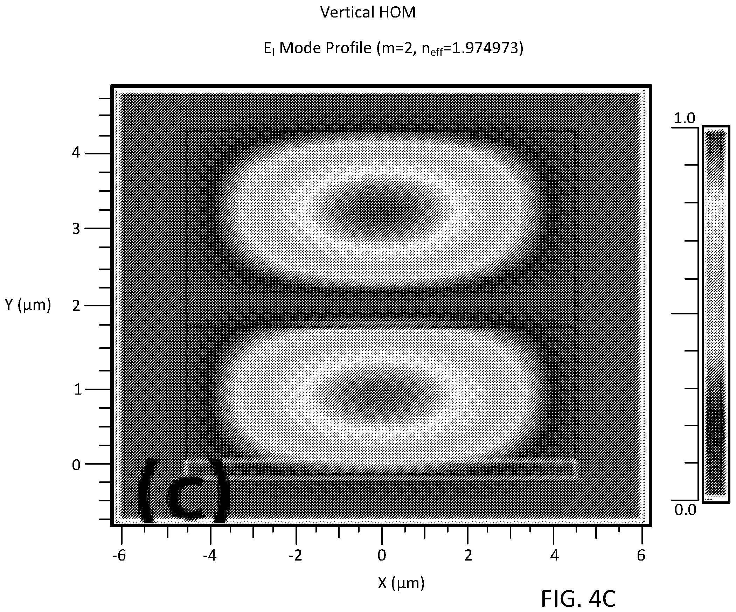

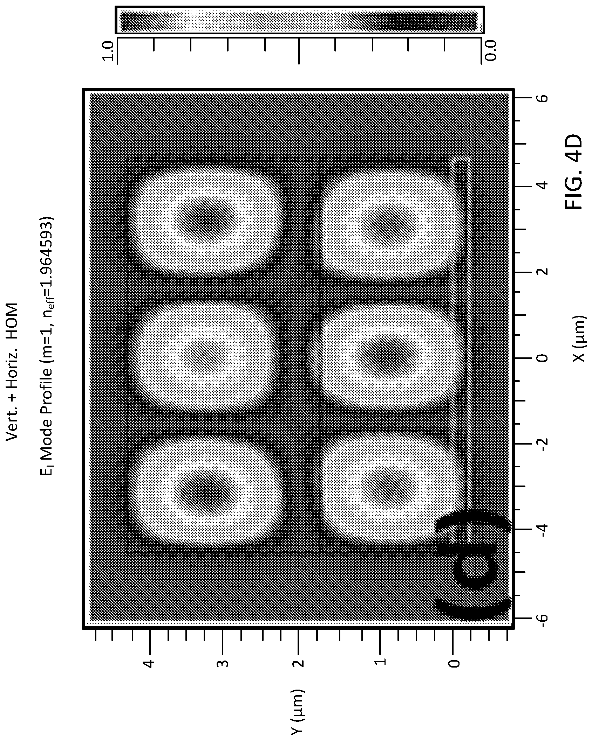

Figures 4A to 4D show example modes of a channel waveguide similar to region (iii) of Figures 2 and 3. Fig. 4A reveals the fundamental mode of the waveguide, while Figs. 4B to 4D depict higher order modes (HOM) which can be classified by horizontal (horiz.) and vertical (vert.) transverse fluctuation of the near field intensity. For the application of coupling to single mode fiber, various embodiments may maximize the transfer of energy into the fundamental mode and suppress the excitation of HOM. Some embodiments may maintain power in the fundamental mode all the way to the output mirror, because even a short region of a non-ideal waveguide transition (e.g., abrupt rib to channel or slab transition) from regions (iii) to (iv) can have adverse effects and cause coupling into HOM.

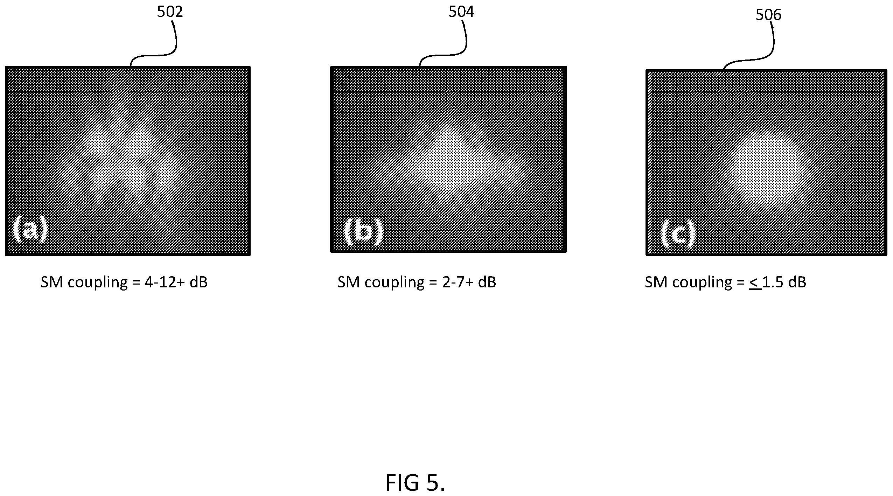

Figure 5 shows experimental infrared (IR) mode characterizations corresponding to various output coupler designs. A first IR mode characterization 502, also shown as (a), shows a highly multi-mode output behavior featuring both vertical and horizontal HOM. This particular example comes from a non-optimized design (with total taper length L<500 micron) similar to prior art. The resulting coupling loss into single mode fiber is very high (e.g. 4-12+ dB) and variable from part to part owing to multimode interference.

Fixing this design to achieve adiabatic transfer to the fundamental mode is estimated to require a total taper length L> 1.5 mm which may be longer than desired.

Still with respect to Fig. 5, a second IR mode characterization 504, also shown as (b), shows that partial improvement of the output mode characteristics can be achieved while maintaining a taper length L<500 micron, through the introduction of a second waveguide design that may be a rib-etched channel waveguide as depicted in Figures 2 and 3, region (ii). In some embodiments, this design may help to enable suppression of vertical HOM but may not entirely suppress horizontal HOM. The mode profile is also not rotationally asymmetric owing to the rib etched channel waveguide termination in this design - resulting in moderate to severe high coupling loss into single mode fiber.

Still with respect to Fig. 5, a third IR mode characterization 506, also shown as (c), shows the output mode characteristic for an optical coupler according to various embodiments and illustrated in Figures 2 and 3. In some embodiments, this device may be designed with a two-stage taper with design parameters (waveguide widths, heights, and taper lengths) specifically selected to ensure >95% power transfer to the fundamental mode of the output waveguide. According to the invention, the two-stage taper includes two distinct types of tapers. According to the invention, the two distinct types of tapers are an inverse taper and a rib taper. In some embodiments, one or more of the two distinct types of tapers may itself have multiple stages, such as a multi-stage inverse taper that may be used as one of the two distinct types of tapers. In various embodiments, a multi-stage taper with at least two distinct types of tapers may be used that may have more than two stage.

In various embodiments, micron scale waveguide heights, H, may typically range from approximately 1 to approximately 12 microns. The waveguide width WC may also have a similar micron scale dimension, typically from approximately 1 to approximately 12 microns in various embodiments. In some embodiments, the waveguide rib etch depth, h, may generally be a fraction of H, ranging from approximately 0.3 to approximately 0.8 and in various embodiments may range preferably from approximately 0.4 to approximately 0.7. In some embodiments, taper length may depend on the waveguide dimension, H, and silicon waveguide size, but may generally be at least several tens of microns to several hundreds of microns (increasing with waveguide H), and may be in excess of 1 millimeter (mm) in some embodiments, but may preferably be less than 10 mm in various embodiments.

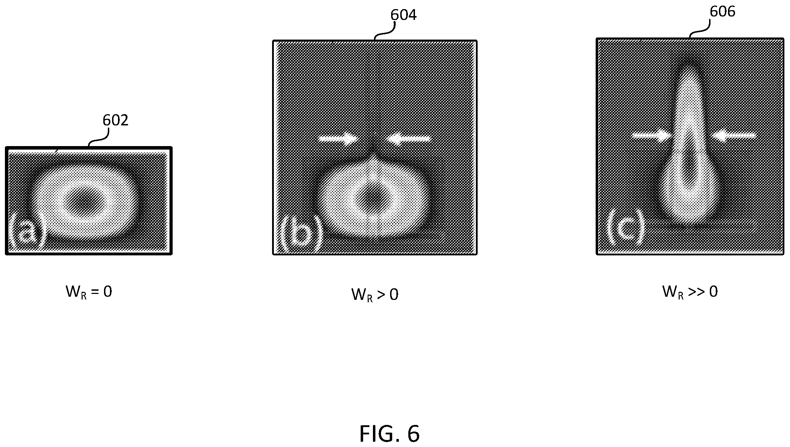

Various embodiments may include a tip-less mode converter featuring a continuous non-zero rib dimension $W_{R(ii)}$ and underlying inverse taper. In some embodiments, the tip-less mode converter may enable a reduced mode mismatch (lower loss) at ii/iii interface compared to previous designs. This aspect pertains to region (ii) of Figures 2 and 3. In particular the "rib" structure is highlighted with the dashed black outline in Figure 3 region (ii). In some embodiments, the rib waveguide width, $W_{R(ii)}$, is non-zero in region (ii) and particularly at the interface between regions (ii) and (iii). Previous designs typically have a rib- width of zero in this region - thus forming a "tip" in the rib structure of the waveguide. The formation of this tip causes a mode mismatch at the interface between (ii) and (iii). Elimination of the tip, as provided in some embodiments, may enable the mode mismatch to vanish. In order to maintain the same adiabatic power transfer into the fundamental mode of the output waveguide, the tip-less design of some embodiments may provide for $W_{R(ii)}$ to be carefully designed so as to minimize excitation of HOM in the stage I taper shown in region (ii) - this is illustrated in Fig. 6 as described below. In general, in various embodiments, $W_{R(ii)}$ may be narrow enough so that the optical mode at the interface between regions (ii) and (iii) is confined to the lower portion of the waveguide (Fig. 6(b)), similar to how the mode would be confined if $W_{R(ii)} = 0$ (Fig 6(a)). This design may favor both low transmission loss and low back reflection at the region (ii/iii) interface in some embodiments. It should be noted that the term "tip-less" is used to emphasize that the "tip" feature is absent from the optical path, therefore it is possible to maintain the physical presence of a "tip" feature (in some embodiments the rib etched feature would need to begin at some point along the device), so long as it is moved sufficiently far way from the optical path (for example > 1 micron, but typically >50 microns).

In various embodiments, $W_{R(ii)}$ may less than approximately 0.5 microns or as low as possible in some embodiments. In various embodiments, the value of $W_{R(ii)}$ may depend on the waveguide height (H) and rib etch depth (h). In some embodiments, $W_{R(ii)}$ may be chosen in a manner that pushes the single mode toward its cutoff condition for a waveguide of the same height where the width of the waveguide, $W_{C(ii)}$, was infinite. In some embodiments where h/H may be approximately 0.5, $W_{R(ii)}$ may be chosen such that $W_{R(ii)} < 0.55 * H$. In various embodiments, for micron scale values of H in a range from approximately 1 micron to approximately 12 microns, $W_{R(ii)}$ may range from approximately 0.5 microns to approximately 5 microns.

Figure 6 shows example optical mode profiles for a waveguide portion at the end of region (ii) immediately prior to entering region (iii). The optical mode profile is calculated for various values of Wr: in a first optical mode profile 602, also shown as (a), Wr = 0 is the "tipped" version used in some previous prior art designs; a second optical mode profile 604, also shown as (b), is an example solution according to various embodiments; and a third optical mode profile 606, also shown as (c) is an example of a non-optimal implementation of a tip-less mode converter, where Wr has been set too large, forcing the mode higher into the waveguide.

Some embodiments may include an optical coupler with a waveguide and at least one layer of a multilayer anti-reflection (AR) coating comprised of silicon-(rich) nitride, $Si_xN_y$, with a tunable refractive index (-1.95 to -2.7). Various embodiments using silicon-(rich) nitride may have a Si:N ratio of x:y, where if x=3, y < 4 and may range such that $1 <= y < 4$ in various embodiments. Various embodiments may include an anti-reflection coating (ARC) as illustrated in region (iv) of Figure 2. In some embodiments, a multilayer ARC may be integrated above the mirror region of the waveguide and may be comprised of optical coatings using silicon-dioxide and silicon-(rich) nitride ($Si_xN_y$) with a stoichiometrically tunable refractive index optimized for low back reflection. In various embodiments, the underlying waveguide may also be comprised of silicon-(rich) nitride ($Si_xN_y$) with a stoichiometrically tunable refractive index. Compared to conventional prior art, wherein a multilayer ARC is optimized for a particular waveguide refractive index, some embodiments may be structured such that the waveguide refractive index is included as a free design parameter. Therefore, global optimization of the output reflectivity may be achieved by co-optimization of the multilayer ARC parameters (layer thicknesses and refractive indices) as well as the refractive index of the underlying waveguide. In some embodiments, n_wvg may be chosen in accordance with:

$$nwvg = n0 * \left(\frac{n2}{n1}\right)2 + \delta.$$

, where

$$\delta = nwvg - neff$$

In the first equation above, $n_0$ is the external refractive index of the outer cladding or environment (typically air, i.e. n=1). $n_1$ is the index of the top ARC layer, and $n_2$ is the index of the bottom ARC layer. $N_{wvg}$ is the actual refractive index of the waveguide material, while $n_{eff}$ is the effective index of the output waveguide fundamental mode. For micron scale waveguides the delta parameter, $\delta$, may typically be in the range of ~0.06 to 0.005 or less.

In the case of silicon-(rich) nitride platforms, $n_{wvg}$ and $n_2$ may typically be a refractive index from ~1.9 to ~2.7. $N_1$ will typically be lower than $N_2$, possibly -1.4 to ~1.9. $N_0$ is then less than $N_1$, typically -1 or -1.4, 1.5 for example.

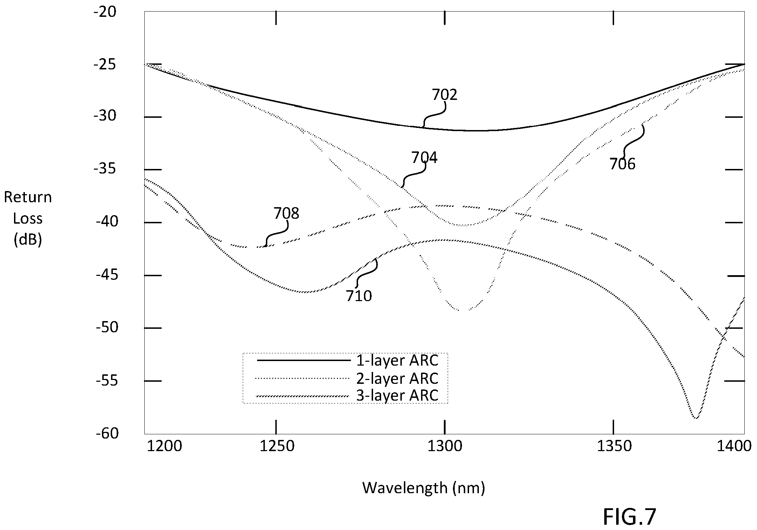

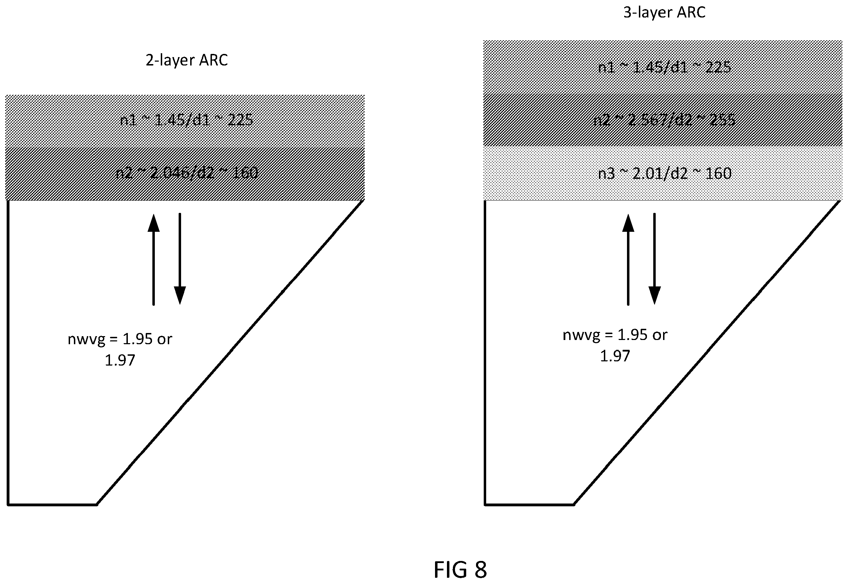

As described with respect to FIGS. 7 and 8, below, the multilayer ARC stacks may enable significantly improved back reflection (return loss) from the output interface above the mirror in various embodiments. Figure 7 illustrates that carefully tuned refractive indices and thicknesses of silicon-(rich) nitride ($Si_xN_y$) based ARC may be used in some embodiments to optimize the reflectivity of an underlying silicon-(rich) nitride ($Si_xN_y$) based waveguide. The dashed lines of Figure 7, highlight the importance of the underlying silicon-(rich) nitride ($Si_xN_y$) waveguide refractive index with respect to some embodiments. As shown, for some embodiments, the example 2-layer ARC stack may perform better for waveguide index 1.97 than index 1.95 and conversely the 3-layer ARC may provide larger bandwidth, but may perform better for waveguide index 1.95 than 1.97. In various embodiments, n_wvg may be used as a free design parameter since small changes (+/- 5%) may not significantly affect the output transmission or single mode coupling performance of the device.

Figure 7 shows modeled reflectance as a function of wavelength for example ARC designs. Solid lines indicate waveguide index modeled as nwvg=1.95, dashed lines indicate nwvg=1.97. A first solid line 702 corresponds to a 1-layer ARC. A second solid line 704 corresponds to a 2-layer ARC. A first dashed line 706 corresponds to a 2-layer ARC. A second dashed line 708 corresponds to a 3-layer ARC. A third solid line 710 corresponds to a 3-layer ARC. Figure 8 shows schematic illustrations of 2-layer and 3-layer ARC stacks in accordance with various embodiments. In some embodiments, the ARC stacks may include silicon-dioxide and silicon-(rich) nitride ($Si_xN_y$) multilayer ARCs on a silicon-(rich) nitride ($Si_xN_y$) based waveguide.

In various embodiments, at least one layer of silicon-(rich) nitride, $Si_xN_y$ may be simultaneously coated in the cladding above other active devices on the Tx chip, thereby increasing hermeticity (resistance to moisture, humidity penetration) and improving reliability of the underlying active device. Various embodiments may include at least one layer of silicon-(rich) nitride ($Si_xN_y$) used in the multilayer AR coating that is simultaneously deposited in the cladding region above one or more active devices on the same Tx chip (Fig. 1). Compared to a single layer AR coating not including silicon-(rich) nitride ($Si_xN_y$) (e.g. oxide only); the inclusion of silicon-(rich) nitride ($Si_xN_y$) in the cladding may provide for improved hermeticity and reduces and/or slows the penetration of humidity and moisture to where it may affect the performance of an underlying active device. The active device may include but is not necessarily limited to: a laser, photodetector, photodiode, optical modulator, diode, etc. In various embodiments, an advantage of utilizing the same layer deposition for both a hermetic layer and an ARC layer may be the ability to reduce process complexity and cost. In some embodiments, it may also be particularly convenient for wafer-scale manufacturing, wherein the ARC deposition may be one of the final processing steps.

In some embodiments, a combination of a single moded output with a multilayer ARC optimized for the waveguide mode effective index may be used, which may enable suppression of back reflection lower than a multi-mode waveguide and ARC. Various embodiments may include a combination of a multi-layer AR coating in region (iv), such as that described above, with optical coupler regions (i-iv) specifically designed for single mode output characteristic. In some embodiments, the combination of single-moded waveguide output and multi-layer ARC may enable further optimization over back-reflection compared to previous prior art designs. In some embodiments, the term "single-moded" waveguide output does not refer to the waveguide's ability to support only one mode, rather it refers to only one mode (i.e. the fundamental mode) being excited by the tapers in regions (ii) and (iii). For example, some embodiments may utilize a multi-mode supporting waveguide at the output regions (iii) and (iv), but the optical coupler may be designed in such a way so the power is adiabatically transferred into the fundamental mode and higher-order modes (HOM) may not be significantly excited (i.e. <5%).

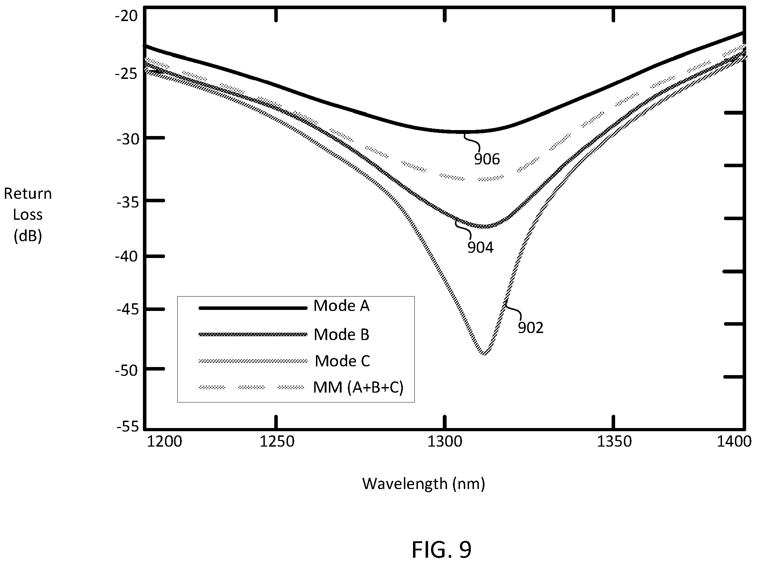

Figure 9 (a-c) depicts example mode profiles for a waveguide of output region (iii or iv) with refractive index n=2, and height, width both equal to 3 microns. The three modes (A, B, C) illustrated are the most easily excited modes in a non-optimal optical coupler similar to some prior art designs. Figure 9 (d) shows the modeled reflectivity of each mode for a 2-layer ARC of the same design shown in Figure 8, except with the waveguide refractive index changed to n=2. A first solid line 902 corresponds to mode A, a second solid line 904 corresponds to mode B, and a third solid line 906 corresponds to mode C. The dashed line labelled 'MM' indicates the net reflectivity for a multi-mode waveguide with equal weighting between modes A, B, and C.

Figure 9, as described above, illustrates the benefit of the suppression of HOM in combination with a multi-layer ARC in accordance with various embodiments. In a multi-mode waveguide, the constituent eigenmodes (e.g. A, B, C, etc.) all travel with different propagation constants (or phase velocities) and can each be assigned a unique effective index (neff). In order to optimize an ARC for minimal back reflection, various embodiments may address the impedance mismatch between the waveguide and free-space (or external cladding). However, this impedance mismatch varies with the neff of each waveguide mode, thereby causing the reflectivity to have a mode dependency. In principle, this means that true impedance matching can only be achieved for a single neff value and therefore a single waveguide mode. For the application of optical coupling to single mode fiber, one might choose to optimize the AR coating for the fundamental mode of the waveguide. As illustrated in Figure 9(d), when this example design of a 2-layer ARC is combined with a single-moded output (mode A) only which suppresses excitation of modes B, C, the back-reflection can be suppressed by >10dB compared to a multi-mode waveguide carrying power equally distributed between modes A, B, and C.

Various embodiments may include programmable mirror angle variation/compensation within a wafer, utilizing multiple designs on one mask and activation of a selected design through stepper x,y translation. In some embodiments, this aspect may relate to region (iv) of Figure 2.

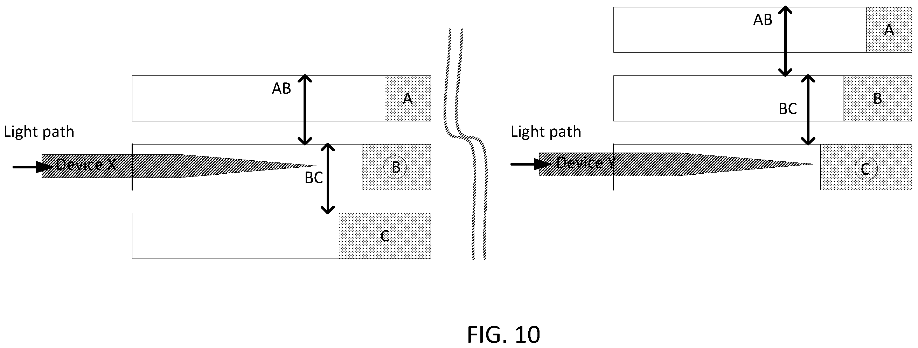

Figure 10 illustrates device selective grayscale design selection in accordance with various embodiments. In this example, two devices X, Y from the same wafer (but different fields) are shown. The grayscale design (or mask) may include more than 1 grayscale slope design with varying angles (this example contains 3, grayscale designs A,B,C). Since device X and device Y are located in different fields of the wafer, it is possible to locally program the grayscale design to select A, B, or C by applying an X,Y shift of the mask relative to the wafer. In this example, a +Y shift of the mask by a distance labelled 'Be' enables grayscale design B to be replaced with design C. In various embodiments, grayscale designs A and B may be printed onto the wafer, but may be located in inactive regions away from the light path. This approach is generalizable to wafer-scale manufacturing of grayscale slopes, and may be used to compensate, for example, radially varying etch selectivity across a wafer. In this example, suppose device X is located at the wafer center and the local etch selectivity is given by X'; similarly device Y may be located toward the wafer edge and experience a local etch selectivity given by Y'. If X' and Y' are unequal, then the resulting mirror profiles for a constant grayscale design will also be different. In some embodiments, by selecting a different grayscale design for device X and device Y, the difference in local etch selectivities may be pre-compensated with a different slope angle in the photoresist, such that the final etched slopes are more closely matched.

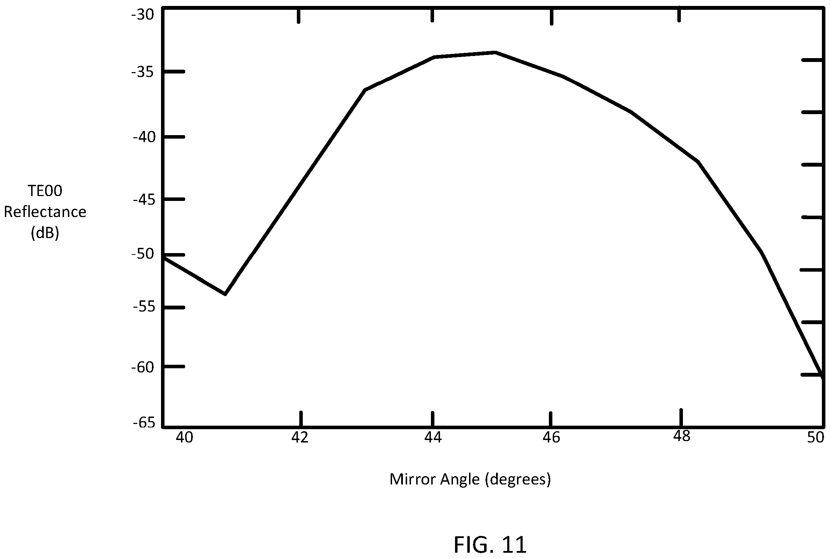

Some examples, not claimed, may include a non-45 degree mirror for additional back reflection suppression. In some examples, this may be optionally combined with packaging modifications to couple off-normal light emission. Various examples may utilize an output mirror angle specifically designed away from 45 degrees in order to reduce back reflection from the output waveguide interface. In some examples, this output waveguide interface may be a transition from the waveguide into air (free space) or into another dielectric material. Figures 11-12 illustrate how mirror angle can be used to suppress back reflection while maintaining single mode output emission. In various examples, a purposeful design of a non-45 deg mirror (i.e. >47deg nominal or <43deg nominal angle), may allow suppression of back reflection into the fundamental mode by an additional >5dB than can be achieved by the ARC design alone. In some examples, for optical coupling to SMF with high efficiency, this design change may be paired with a change in the packaging optics so as to accommodate a non-vertical beam of emission (e.g., angled prism, lens, tilted fiber, fiber facet angle change, etc.).

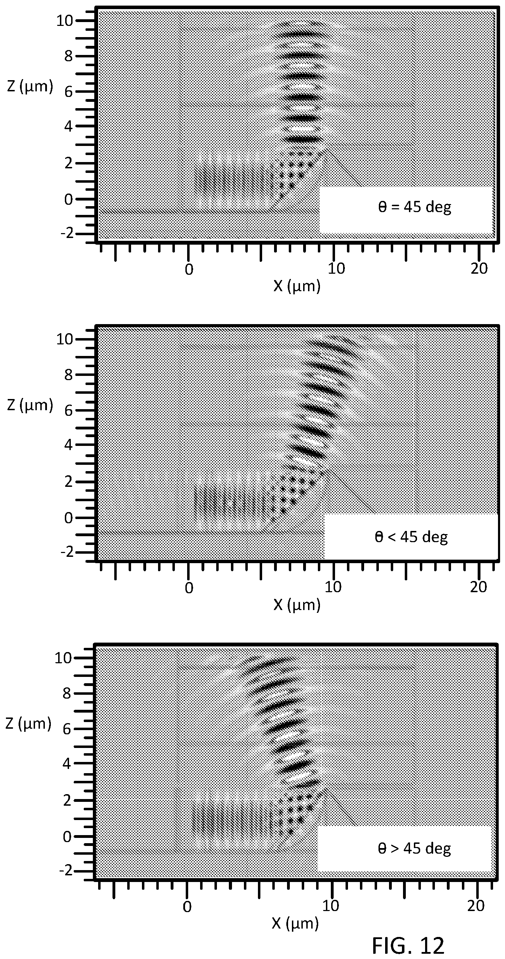

Figure 11 shows simulation results of single-mode (TE00) back reflection for an example optical coupler as a function of mirror angle theta in accordance with various examples. Figure 12 shows a corresponding finite difference time domain (FDTD) field distribution for various mirror angles, showing field distributions for theta = 45 degrees, theta < 45 degrees, and theta > 45 degrees.

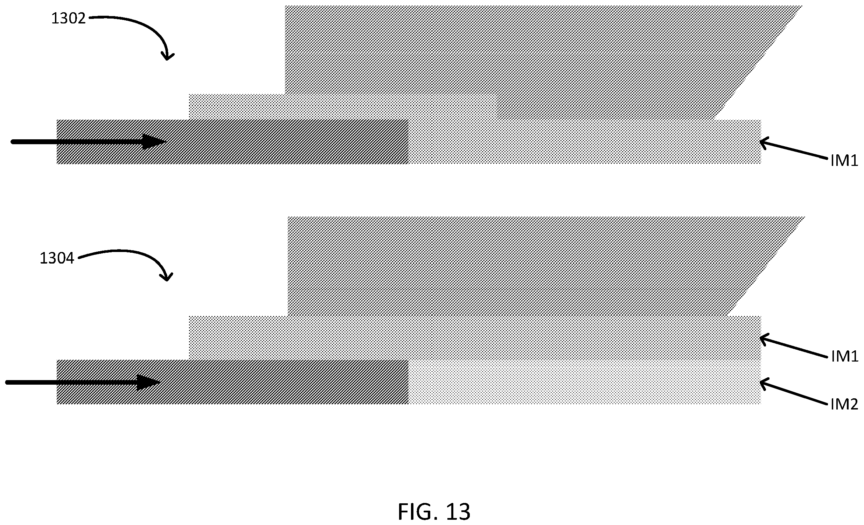

Figure 13 is a cross-sectional side view of additional embodiments of the optical coupler, where one or more intermediate materials (IMs) are integrated with the inverse taper and output waveguide. In various embodiments, the one or more IMs may include a dielectric layer that may be deposited on a chip or wafer through one or more of a variety of techniques such as evaporation, atomic layer deposition (ALD), or chemical vapor deposition (CVD). IMs may be formed of silicon dioxide, silicon nitride, silicon-rich nitride, titanium dioxide, aluminum nitride, tantalum oxide, poly-crystalline silicon, silicon oxynitride, or other materials in various embodiments. IMs may be implemented in both 'embedded' (middle) and 'underlying' (bottom) Si taper designs in various embodiments. In some embodiments, intermediate materials (IMs) may integrated into the optical coupling device. Examples of IM integration are indicated with a first coupler 1302 and a second coupler 1304. The first coupler 1302 shows an example of an IM integrated on top of a Si inverse taper, where that taper is embedded in the output waveguide. The second coupler 1304 shows an example of an IM integrated such that the Si inverse taper is entirely underneath the output waveguide (no longer embedded). In various embodiments, integration of IMs may allow for greater design freedom and manipulation of the optical properties of the inverse taper - and may be used, for example, to tailor or improve taper efficiency across a wider spectral bandwidth or improve polarization diversity (ability to operate for multiple polarizations with low loss). IMs may also enable fabrication of the optical coupler to be performed without affecting the underlying silicon waveguide. In some embodiments, the Si inverse taper may be entirely beneath and not embedded in the low index waveguide.

Various embodiments may include other combinations of one or more of the components or elements mentioned above.

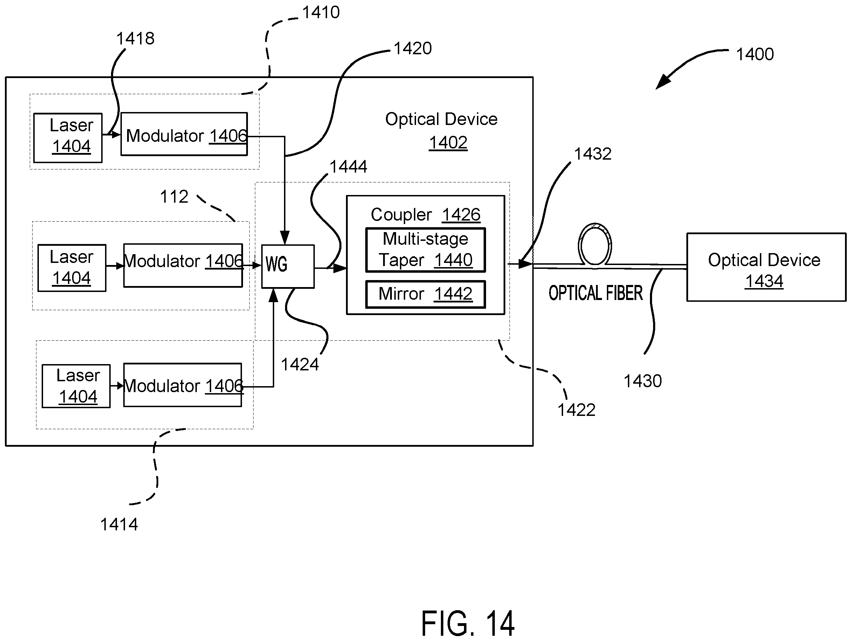

FIG. 14 is a block diagram of an optoelectronic system 1400 that may include a single mode optical coupler configured in accordance with some embodiments. The optoelectronic system 1400 may be used to transmit an optical signal modulated with a data signal via an optical fiber, for example, between racks in a data center, or long-distance, between data storage facilities, data centers, and the like.

The optoelectronic system 1400 may include an optical apparatus (device) 1402 having one or more light sources (e.g., laser devices) 1404 to provide a light signal 1418 (e.g., constant light intensity signal) to a respective modulator 1406 to modulate input light according to a data signal to be transmitted. Each combination of the light source 1404 and corresponding modulator 1406 may comprise a communication channel 1410, 1412, 1414. The modulator 1406 may output a modulated optical signal 1420 to a multiplexer (not shown), where the signal may be input to an optical coupling assembly 1422 having a waveguide 1424 and an optical coupler, such as a single mode optical coupler (SMOC) 1426. Alternatively, one or more signals (e.g., 1420) from one or more communication channels 1410, 1412, and 1414 may be directly input to the optical coupling assembly 1422 without being multiplexed. In some embodiments, a single light source and communication channel may be used.

In some embodiments, the SMOC 1426 corresponds to or is configured in a similar fashion as an optical coupler described with respect to FIGS. 1, 2, 3, 8, or 13. In various embodiments, one or more components of the SMOC 1426 may be a component of or coupled with a photonic chip such as a silicon photonic transmitter chip. In various embodiments, one or more components of the SMOC 1426 may lie in a plane of the photonic chip that may be described as a horizontal plane, and the SMOC 1426 may emit light in a vertical direction relative to the horizontal plane.

The optical coupling assembly 1422, with the SMOC 1426, may provide an interface from the channels 1410, 1412, 1414 to an optical communication channel (e.g., optical fiber cable or other configuration that may include coupling optics followed by fiber) 1430 and may be configured to transfer an optical signal 1432 to the optical communication channel 1430, to be received by another optical device 1434. In embodiments, the optical waveguide 1424 may comprise a silicon-on-insulator (SOI)-based optical waveguide. The SMOC 1426 includes a multi-stage taper 1440 and a mirror 1442.

The SMOC 1426, with the multi-stage taper 1440 and the mirror 1442, is configured to transform a light signal 1444 propagating through the waveguide 1424 into the optical signal 1432 to couple with the optical communication channel 1430, which is a single mode optical fiber, according to the claimed invention.

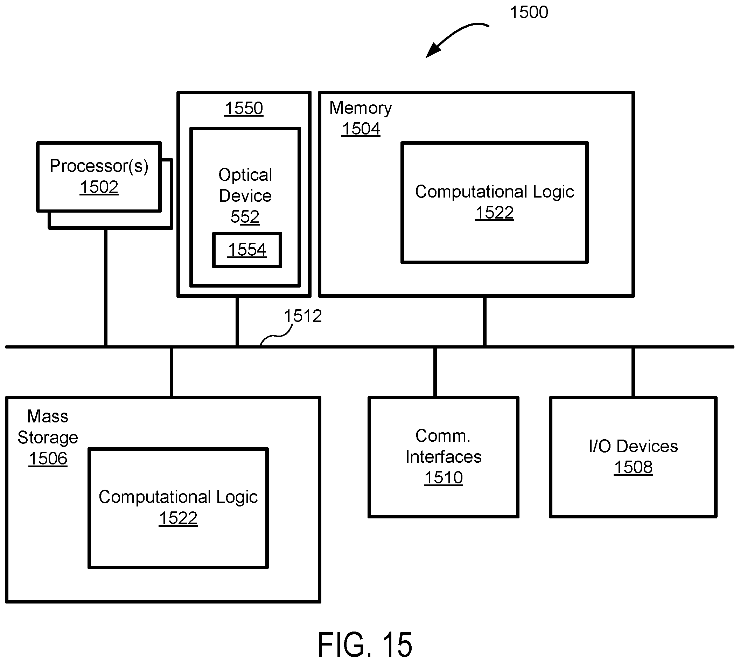

FIG. 15 illustrates an example computing device 1500 suitable for use with various components of FIGS. 1, 2, 3, 8, 13, and/or 14, such as optoelectronic system 1400 including optical device 1402 having optical coupler 1426 with multi-stage taper 1440 and mirror 1442 of FIG. 14, or optical couplers described with respect to FIGS. 1, 2, 3, or 13 in accordance with various embodiments. As shown, computing device 1500 may include one or more processors or processor cores 1502 and system memory 1504. For the purpose of this application, the terms "processor" and "processor cores" may be considered synonymous, unless the context clearly requires otherwise. The processor 1502 may include any type of processors, such as a central processing unit (CPU), a microprocessor, and the like. The processor 1502 may be implemented as an integrated circuit having multi-cores, e.g., a multi-core microprocessor. The computing device 1500 may include mass storage devices 1506 (such as diskette, hard drive, volatile memory (e.g., dynamic random-access memory (DRAM), compact disc read-only memory (CD-ROM), digital versatile disk (DVD), and so forth). In general, system memory 1504 and/or mass storage devices 1506 may be temporary and/or persistent storage of any type, including, but not limited to, volatile and non-volatile memory, optical, magnetic, and/or solid state mass storage, and so forth. Volatile memory may include, but is not limited to, static and/or dynamic random access memory. Non-volatile memory may include, but is not limited to, electrically erasable programmable read-only memory, phase change memory, resistive memory, and so forth.

The computing device 1500 may further include input/output devices 1508 (such as a display (e.g., a touchscreen display), keyboard, cursor control, remote control, gaming controller, image capture device, and so forth) and communication interfaces 1510 (such as network interface cards, modems, infrared receivers, radio receivers (e.g., Bluetooth®), and so forth). The computing device 1500 may include an optoelectronic system 1550 that may include an optical device 1552 with an optical coupler 1554. In various examples, the optoelectronic system 1550 may be configured similarly to part or all of the optoelectronic system 1400, the optical device 1552 may be configured similarly to the optical apparatus 1402, and/or the optical coupler 1554 may be configured similarly to the optical coupler 102 of FIG. 1, the SMOC 1426 of FIG. 14, and/or an optical coupler described with respect to one or more of FIGS. 2, 3, 8, or 13.

The communication interfaces 1510 may include communication chips (not shown) that may be configured to operate the device 1500 in accordance with a Global System for Mobile Communication (GSM), General Packet Radio Service (GPRS), Universal Mobile Telecommunications System (UMTS), High Speed Packet Access (HSPA), Evolved HSPA (E-HSPA), or Long-Term Evolution (LTE) network. The communication chips may also be configured to operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chips may be configured to operate in accordance with Code Division Multiple Access (CDMA), Time Division Multiple Access (TDMA), Digital Enhanced Cordless Telecommunications (DECT), Evolution-Data Optimized (EV-DO), derivatives thereof, as well as any other wireless protocols that are designated as 3G, 4G, 5G, and beyond. The communication interfaces 1510 may operate in accordance with other wireless protocols in other examples.

The above-described computing device 1500 elements may be coupled to each other via system bus 1512, which may represent one or more buses. In the case of multiple buses, they may be bridged by one or more bus bridges (not shown). Each of these elements may perform its conventional functions known in the art. In particular, system memory 1504 and mass storage devices 1506 may be employed to store a working copy and a permanent copy of the programming instructions for the operation of various components of computer system 1500, including but not limited to the operation of the optical device 1402 of FIG. 14, an operating system of computer system 1500, and/or one or more applications. The various elements may be implemented by assembler instructions supported by processor(s) 1502 or high-level languages that may be compiled into such instructions.

The permanent copy of the programming Instructions may be placed into mass storage devices 1506 in the factory, or in the field through, for example, a distribution medium (not shown), such as a compact disc (CD), or through communication interface 1510 (from a distribution server (not shown)). That is, one or more distribution media having an implementation of the agent program may be employed to distribute the agent and to program various computing devices.

The number, capability, and/or capacity of the elements 1508, 1510, 1512 may vary, depending on whether computing device 1500 is used as a stationary computing device, such as a set-top box or desktop computer, or a mobile computing device, such as a tablet computing device, laptop computer, game console, or smartphone. Their constitutions are otherwise known, and accordingly will not be further described.

In examples, memory 1504 may include computational logic 1522 configured to implement various firmware and/or software services associated with operations of optical device 1402 and optical coupler 1426, as described in reference to FIG. 14 and/or optical couplers described in reference to FIGS. 2, 3, 8, or 13. For some examples, at least one of processors 1502 may be packaged together with computational logic 1522 configured to practice aspects of embodiments described herein to form a System in Package (SiP) or a System on Chip (SoC).

The computing device 1500 may include or otherwise associate with an optoelectronic system, such as system 1400, implementing aspects of the optical device 1402, including the optical coupler 1426 as described above, and in particular the embodiments of the optical coupler described in reference to FIGS. 1, 2, 3, 8, 13, and 14. In some examples, at least some components of the optoelectronic system 1400 (e.g., optical device 1402) may be communicatively coupled with the computing device 1500 and/or be included in one or more of the computing device 1500 components, such as communication interfaces 1510, for example.

In various implementations, the computing device 1500 may comprise one or more components of a data center, a laptop, a netbook, a notebook, an ultrabook, a smartphone, a tablet, a personal digital assistant (PDA), an ultra mobile PC, a mobile phone, or a digital camera. In further implementations, the computing device 1500 may be any other electronic device that processes data.

Various embodiments may include any suitable combination of the above-described embodiments including alternative (or) embodiments of embodiments that are described in conjunctive form (and) above (e.g., the "and" may be "and/or").

**Claims**

1. An optical apparatus (1402) comprising:

   a light source (1404) to provide a light signal;
   a modulator (1406) to modulate the light signal according to a data signal to be transmitted and output a modulated optical signal (1420); and
   an optical coupling assembly (1422) comprising a silicon waveguide (1424) to receive the modulated optical signal (1420) and a single mode optical coupler (1426) to transform the modulated optical signal (1420, 1444) propagating through the silicon waveguide (1424) into an optical signal (1432) to couple with a single mode fiber (1430),
   the single mode optical coupler (1426) comprising:

   a multi-stage optical tapered waveguide (1440) to convert the modulated optical signal (1420, 1444) taken from the silicon waveguide (1424) from a first mode field diameter to a second mode field diameter larger than the first mode field diameter adiabatically; and
   a total-internal-reflection mirror (1442) formed in a dielectric layer under an approximately 45 degree angle with respect to a plane of the dielectric layer to reflect the modulated optical signal (1420, 1444) from the multi-stage optical tapered waveguide (1440) substantially perpendicularly and direct the reflected modulated optical signal, as the optical signal (1432), for coupling to the single mode fiber (1430),

   wherein the multi-stage optical tapered waveguide (1440) includes an inverse tapered waveguide as a first stage and a rib tapered waveguide as a second stage, and
   wherein the single mode optical coupler (1426) comprises, in a propagation direction of the modulated optical signal (1420, 1444), a silicon waveguide region, an inverse taper region, an output waveguide region and a final waveguide region, the silicon waveguide region including an input-side slope with respect to a plane perpendicular to the propagation direction, the inverse tapered waveguide being included in the inverse taper region, the rib tapered waveguide being included in the inverse taper region and the output waveguide region, and the mirror (1442) being included in the final waveguide region.

2. The apparatus (1402) of claim 1, wherein the rib tapered waveguide is a tipless rib tapered waveguide.

3. The apparatus (1402) of claim 1 wherein the second stage rib tapered waveguide couples to a channel waveguide through a rib-to-channel tapered waveguide section.

4. The apparatus (1402) of claim 3, wherein the inverse tapered waveguide is formed of a material including silicon, silicon nitride, silicon-rich nitride, aluminum nitride, tantalum oxide, or silicon oxynitride, and wherein the inverse tapered waveguide has a higher refractive index than the channel waveguide.

5. The apparatus (1402) of any one of claims 1-3, wherein a portion of the rib tapered waveguide overlaps with the inverse tapered waveguide.

6. The apparatus (1402) of claim 1, further comprising an anti-reflective coating, ARC, positioned such that light reflected off the mirror (1442) is to pass through the ARC.

7. The apparatus (1402) of claim 6, wherein the ARC is a multi-layer ARC.

8. The apparatus (1402) of claim 7, wherein a first layer of the multi-layer ARC includes silicon-rich nitride and a second layer of the multi-layer ARC includes silicon dioxide.

9. The apparatus (1402) of any one of claims 6-8, wherein a layer of the ARC extends across an electrically active device on the same chip, die, or wafer as the multi-stage optical tapered waveguide (1440).

**Patentansprüche**

1. Optische Vorrichtung (1402), umfassend:

    eine Lichtquelle (1404) zum Liefern eines Lichtsignals;
    einen Modulator (1406) zum Modulieren des Lichtsignals gemäß einem zu übertragenden Datensignal und Ausgeben eines modulierten optischen Signals (1420); und
    eine optische Koppelbaugruppe (1422) umfassend einen Siliziumwellenleiter (1424) zum Empfangen des modulierten optischen Signals (1420) und einen Einmoden-Optokoppler (1426) zum Umwandeln des sich durch den Siliziumwellenleiter (1424) ausbreitenden modulierten optischen Signals (1420, 1444) in ein optisches Signal (1432) zum Koppeln mit einer Einmodenfaser (1430),
    wobei der Einmoden-Optokoppler (1426) umfasst:

    einen mehrstufigen optisch verjüngten Wellenleiter (1440) zum Umwandeln des dem Siliziumwellenleiter (1424) entnommenen modulierten optischen Signals (1420, 1444) von einem ersten Modusfelddurchmesser zu einem zweiten Modusfelddurchmesser, der größer ist als der erste Modusfelddurchmesser, auf adiabatische Weise; und
    einen Totalreflexionsspiegel (1442), der in einer dielektrischen Schicht unter einem Winkel von ungefähr 45 Grad bezüglich einer Ebene der dielektrischen Schicht angeordnet ist, um das modulierte optische Signal (1420, 1444) von dem mehrstufigen optisch verjüngten Wellenleiter (1440) im Wesentlichen senkrecht zu reflektieren und das reflektierte modulierte optische Signal als das optische Signal (1432) zum Koppeln zu der Einmodenfaser (1430) zu schicken, wobei der mehrstufige optisch verjüngte Wellenleiter (1440) einen umgekehrt verjüngten Wellenleiter als eine erste Stufe und einen rippenverjüngten Wellenleiter als eine zweite Stufe enthält, und
    wobei der Einmoden-Optokoppler (1426) in einer Ausbreitungsrichtung des modulierten optischen Signals (1420, 1444) ein Siliziumwellenleitergebiet, ein umgekehrtes Verjüngungsgebiet, ein Ausgabewellenleitergebiet und ein finales Wellenleitergebiet umfasst, wobei das Siliziumwellenleitergebiet eine eingangsseitige Steigung bezüglich einer Ebene senkrecht zu der Ausbreitungsrichtung enthält, der umgekehrt verjüngte Wellenleiter in dem umgekehrten Verjüngungsgebiet enthalten ist, der rippenverjüngte Wellenleiter in dem umgekehrten Verjüngungsgebiet und dem Ausgabewellenleitergebiet enthalten ist und der Spiegel (1442) in dem finalen Wellenleitergebiet enthalten ist.

2. Vorrichtung (1402) nach Anspruch 1, wobei der rippenverjüngte Wellenleiter ein spitzenloser rippenverjüngter Wellenleiter ist.

3. Vorrichtung (1402) nach Anspruch 1, wobei der rippenverjüngte Wellenleiter der zweiten Stufe durch einen Rippe-zu-Kanal-verjüngten Wellenleiterabschnitt an einen Kanalwellenleiter gekoppelt ist.

4. Vorrichtung (1402) nach Anspruch 3, wobei der umgekehrt verjüngte Wellenleiter aus einem Material einschließlich Silizium, Siliziumnitrid, siliziumreichem Nitrid, Aluminiumnitrid, Tantaloxid oder Siliziumoxynitrid gebildet ist und wobei der umgekehrt verjüngte Wellenleiter einen höheren Brechungsindex als der Kanalwellenleiter aufweist.

5. Vorrichtung (1402) nach einem der Ansprüche 1-3, wobei ein Abschnitt des rippenverjüngten Wellenleiters den umgekehrt verjüngten Wellenleiter überlappt.

6. Vorrichtung (1402) nach Anspruch 1, weiter umfassend eine Antireflexbeschichtung, ARC, die so positioniert ist, dass das vom Spiegel (1442) reflektierte Licht durch die ARC hindurchläuft.

7. Vorrichtung (1402) nach Anspruch 6, wobei die ARC eine mehrschichtige ARC ist.

8. Vorrichtung (1402) nach Anspruch 7, wobei eine erste Schicht der mehrschichtigen ARC siliziumreiches Nitrid enthält und eine zweite Schicht der mehrschichtigen ARC Siliziumdioxid enthält.

9. Vorrichtung (1402) nach einem der Ansprüche 6-8, wobei eine Schicht der ARC sich über eine elektrisch aktive Einrichtung auf dem gleichen Chip, Die oder Wafer wie der mehrstufige optisch verjüngte Wellenleiter (1440) erstreckt.

**Revendications**

1. Appareil optique (1402) comprenant :

une source de lumière (1404) pour fournir un signal lumineux ;
un modulateur (1406) pour moduler le signal lumineux selon un signal de données à transmettre et délivrer un signal optique modulé (1420) ; et
un ensemble de couplage optique (1422) comprenant un guide d'ondes en silicium (1424) pour recevoir le signal optique modulé (1420) et un coupleur optique monomode (1426) pour transformer le signal optique modulé (1420, 1444) se propageant à travers le guide d'ondes en silicium (1424) en un signal optique (1432) à coupler avec une fibre monomode (1430),

le coupleur optique monomode (1426) comprenant :

un guide d'ondes optique conique à plusieurs étages (1440) pour convertir de manière adiabatique le signal optique modulé (1420, 1444) pris dans le guide d'ondes en silicium (1424) d'un premier diamètre de champ de mode à un deuxième diamètre de champ de mode plus grand que le premier diamètre de champ de mode ; et
un miroir à réflexion interne totale (1442) formé dans une couche diélectrique suivant un angle d'environ 45 degrés par rapport à un plan de la couche diélectrique pour réfléchir le signal optique modulé (1420, 1444) depuis le guide d'ondes optique conique à plusieurs étages (1440) sensiblement perpendiculairement et diriger le signal optique modulé réfléchi, en tant que signal optique (1432), pour le couplage à la fibre monomode (1430),
où le guide d'ondes optique conique à plusieurs étages (1440) comprend un guide d'ondes à conicité inverse comme premier étage et un guide d'ondes à conicité nervurée comme deuxième étage, et
où le coupleur optique monomode (1426) comprend, dans une direction de propagation du signal optique modulé (1420, 1444), une région de guide d'ondes en silicium, une région à conicité inverse, une région de guide d'ondes de sortie et une région de guide d'ondes finale, la région de guide d'ondes en silicium comprenant une pente côté entrée par rapport à un plan perpendiculaire à la direction de propagation, le guide d'ondes à conicité inverse étant inclus dans la région à conicité inverse, le guide d'ondes à conicité nervurée étant inclus dans la région à conicité inverse et la région de guide d'ondes de sortie, et le miroir (1442) étant inclus dans la région de guide d'ondes finale.

2. Appareil (1402) selon la revendication 1, dans lequel le guide d'ondes à conicité nervurée est un guide d'ondes à conicité nervurée sans pointe.

3. Appareil (1402) selon la revendication 1, dans lequel le guide d'ondes à conicité nervurée du deuxième étage se couple à un guide d'ondes à canaux par l'intermédiaire d'une section de guide d'ondes conique de type nervures à canaux.

4. Appareil (1402) selon la revendication 3, dans lequel le guide d'ondes à conicité inverse est formé d'un matériau comprenant le silicium, le nitrure de silicium, le nitrure riche en silicium, le nitrure d'aluminium, l'oxyde de tantale ou l'oxynitrure de silicium, et où le guide d'ondes à conicité inverse a un indice de réfraction plus élevé que le guide d'ondes à canaux.

5. Appareil (1402) selon l'une quelconque des revendications 1 à 3, dans lequel une partie du guide d'ondes à conicité nervurée chevauche le guide d'ondes à conicité inverse.

6. Appareil (1402) selon la revendication 1, comprenant en outre un revêtement anti-reflet, ARC, positionné de telle sorte que la lumière réfléchie par le miroir (1442) passe à travers l'ARC.

7. Appareil (1402) selon la revendication 6, dans lequel l'ARC est un ARC multicouche.

8. Appareil (1402) selon la revendication 7, dans lequel une première couche de l'ARC multicouche comprend du nitrure riche en silicium et une deuxième couche de l'ARC multicouche comprend du dioxyde de silicium.

9. Appareil (1402) selon l'une quelconque des revendications 6 à 8, dans lequel une couche de l'ARC s'étend à travers un dispositif électriquement actif sur la même puce, le même dé ou la même tranche que le guide d'ondes conique optique à étages multiples (1440).

FIG. 1

FIG. 2

EP 3 458 888 B1

FIG. 3

Fundamental mode

$E_I$ Mode Profile (m=1, $n_{eff}$=1.98252)

(a)

Y (μm)

X (μm)

EP 3 458 888 B1

FIG. 4A

Horizontal HOM

$E_l$ Mode Profile (m=1, $n_{eff}$=1.98252)

FIG. 4B

EP 3 458 888 B1

Vertical HOM

$E_I$ Mode Profile (m=2, $n_{eff}$=1.974973)

FIG. 4C

EP 3 458 888 B1

Vert. + Horiz.  HOM

$E_I$ Mode Profile (m=1, $n_{eff}$=1.964593)

**(d)**

FIG. 4D

502                    504                   506

SM coupling = 4-12+ dB      SM coupling = 2-7+ dB      SM coupling = $\leq$ 1.5 dB

FIG 5.

$W_R = 0$          $W_R > 0$          $W_R \gg 0$

FIG. 6

FIG.7

EP 3 458 888 B1

2-layer ARC

n1 ~ 1.45/d1 ~ 225

n2 ~ 2.046/d2 ~ 160

nwvg = 1.95 or
1.97

3-layer ARC

n1 ~ 1.45/d1 ~ 225

n2 ~ 2.567/d2 ~ 255

n3 ~ 2.01/d2 ~ 160

nwvg = 1.95 or
1.97

FIG 8

EP 3 458 888 B1

FIG. 9

FIG. 10

FIG. 11

EP 3 458 888 B1

FIG. 12

FIG. 13

FIG. 14

EP 3 458 888 B1

EP 3 458 888 B1

1500

Processor(s)
1502

1550

Optical
Device
552

1554

Memory
1504

Computational Logic
1522

1512

Mass
Storage
1506

Computational Logic
1522

Comm.
Interfaces
1510

I/O Devices
1508

FIG. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 28272816
- US 62339624
- WO 2016011002 A1
- US 2016041340 A1
- WO 2016064425 A1
- WO 2018002675 A1
- WO 2016172202 A1
- WO 2013048411 A1

### Non-patent literature cited in the description

- **GAN OFIR et al.** Programmed resist sidewall profiles using subresolution binary grayscale masks for Si-photonics applications. *ADVANCED FABRICATION TECHNOLOGIES FOR MICRO/NANO OPTICS AND PHOTONICS V, SPIE, 1000 20TH ST. BELLINGHAM WA 98225-6705 USA,* vol. 8249 (1